# EUROPEAN PATENT APPLICATION

(11) **EP 4 620 306 A1**
(43) Date of publication of application: **24.09.2025**
(21) Application number: 25164286.4
(22) Date of filing: 18.03.2025
(51) Int. Cl.: A01N 57/20, A01N 25/30, A01P 13/00

(54) **HERBICIDAL COMPOSITION**

(30) Priority: 19.03.2024 US 202463567188 P
(71) Applicant: Nouryon Chemicals International B.V., 1101 BZ Amsterdam (NL)
(72) Inventor: ISLAM, Mojahedul, 1101 BZ Amsterdam (NL); WU, Yao, 1101 BZ Amsterdam (NL)
(74) Representative: Ingrassia, Fisher & Lorenz UK Ltd.

(57) **Abstract**

A herbicidal composition includes glyphosate and first and second surfactants. The first surfactant has the structure: 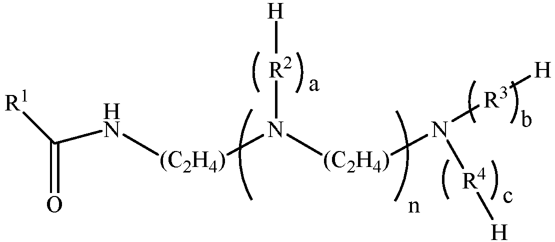 wherein R¹ is a linear or branched, saturated or unsaturated alkyl group having from 5 to 22 carbon atoms, each of R², R³ and R⁴ is independently an alkylene oxide group, a is from 0 to 10, each of b and c is independently from about 1 to about 10; and n is 0 to about 3. The second surfactant has the structure: 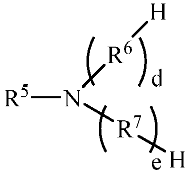 wherein R⁵ is a linear or branched, saturated or unsaturated alkyl group having from 8 to 18 carbon atoms, each of R⁶ and R⁷ is independently an alkylene oxide group, and each of d and e is independently from about 1 to about 5.

## Description

### TECHNICAL FIELD

The present disclosure generally relates to a herbicidal composition. More specifically, this disclosure relates to a composition that includes two particular surfactants.

### BACKGROUND

N-phosphonomethylglycine ("glyphosate") is an effective post-emergent foliar-applied herbicide. In its acid form, glyphosate is relatively insoluble in water (1.16% by weight at 25°C). For this reason, it is typically formulated as a water-soluble salt such as a monobasic, dibasic, or tribasic salt. Typical glyphosate salts include, for example, the mono(isopropylammonium) ("IPA"), potassium, sodium, monoethanolammonium ("MEA"), trimethylsulfonium ("TMS"), ammonium, diammonium salts, n-propylamine, ethylamine, ethylenediamine, and hexamethylenediamine salts.

Glyphosate salts are typically co-formulated with a surfactant to maximize herbicidal efficacy. However, the development of concentrated glyphosate is challenging due to the limited compatibility of surfactant at high glyphosate loadings.

Previous studies have indicated that various salts of glyphosate have considerable differences in their compatibility with surfactants. It has been shown that the potassium salt of glyphosate is advantageous due to the high solubility in water and the resulting high density that allows for higher loadings in formulations. However, potassium glyphosate offers limited compatibility with common surfactants used with glyphosate.

It has also been observed that certain of the other salts of glyphosate are difficult to formulate at loadings of, for example, about 540 g a.e./L, or higher, such as about 600 g a.e./L and higher in combination with a surfactant. The other salts of glyphosate have been observed to offer better compatibility with surfactants compared to the potassium salt. For example, monoethanolamine (MEA) glyphosate has been observed to be more compatible with a wider variety of surfactants. However, the limited solubility and density of the MEA salt of glyphosate is a limiting factor in the formulation of a liquid herbicidal concentrate.

Accordingly, there remains an opportunity for improvement. Furthermore, other desirable features and characteristics of the present disclosure will become apparent from the subsequent detailed description of the disclosure and the appended claims, taken in conjunction with the accompanying drawings and this background of the disclosure.

### SUMMARY

This disclosure provides a herbicidal composition that includes (a) glyphosate or a derivative thereof, (b) a first surfactant present in an amount of from about 1 to about 15 weight percent actives based on a total weight of the composition and (c) a second surfactant present in an amount of from about 1 to about 15 weight percent actives based on a total weight of the composition. The (b) first surfactant has the structure: 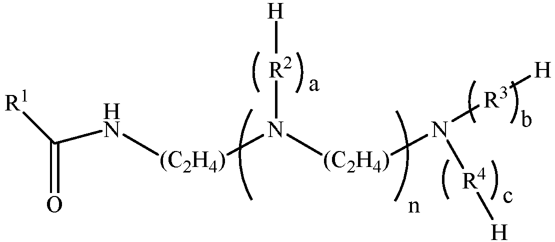 wherein R¹ is a linear or branched, saturated or unsaturated alkyl group having from 5 to 22 carbon atoms, each of R², R³ and R⁴ is independently an alkylene oxide group, a is from 0 to 10, each of b and c is independently from about 1 to about 10; and n is 0 to about 3. The second surfactant is present in an amount of from about 1 to about 15 weight percent actives based on a total weight of the composition and has the structure: 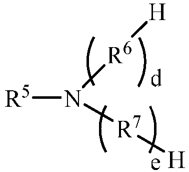 wherein R⁵ is a linear or branched, saturated or unsaturated alkyl group having from 8 to 18 carbon atoms, each of R⁶ and R⁷ is independently an alkylene oxide group, and each of d and e is independently from about 1 to about 5.

### BRIEF DESCRIPTION OF THE DRAWINGS

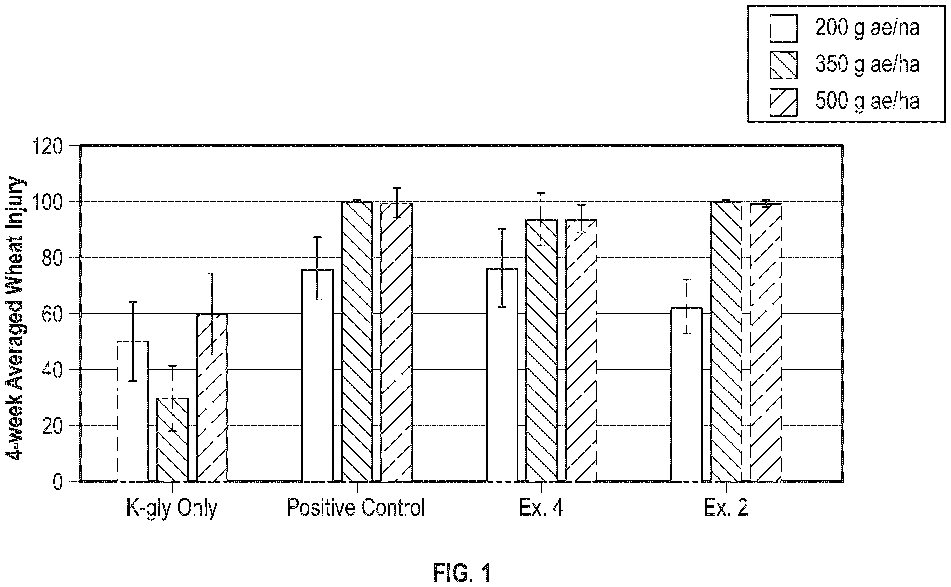

The present disclosure will hereinafter be described in conjunction with the following drawing figure, wherein
FIG. 1 is a bar-graph of 4-Week Averaged Wheat Injury as a function of Sample Type, as is described in the Examples.

### DETAILED DESCRIPTION

The following detailed description is merely exemplary in nature and is not intended to limit the current composition. Furthermore, there is no intention to be bound by any theory presented in the preceding background or the following detailed description.

Embodiments of the present disclosure are generally directed to surfactants, compositions including the same, and methods for forming the same. For the sake of brevity, conventional techniques related to making surfactants and such compositions may not be described in detail herein. Moreover, the various tasks and process steps described herein may be incorporated into a more comprehensive procedure or process having additional steps or functionality not described in detail herein. In particular, various steps in the manufacture of surfactants and associated compositions are well-known and so, in the interest of brevity, many conventional steps will only be described briefly herein or will be omitted entirely without providing the well-known process details.

In this disclosure, the terminology "about" can describe values ± 0.1, 0.5, 1, 2, 3, 4, 5, 6, 7, 8, 9, or 10%, in various embodiments. Moreover, it is contemplated that, in various non-limiting embodiments, it is to be appreciated that all numerical values as provided herein, save for the actual examples, are approximate values with endpoints or particular values intended to be read as "about" or "approximately" the value as recited. It is also contemplated that all isomers and chiral options for each compound described herein are hereby expressly contemplated for use herein in various non-limiting embodiments.

Throughout this disclosure, the terminology percent "actives" is well recognized in the art and means the percent amount of active or actual compound or molecule present as compared to, for example, a total weight of a diluted solution of a solvent and such a compound. Some compounds, such as a solvent, are not described relative to a percent actives because it is well known to be approximately 100% actives. Any one or more of the values described herein may be alternatively described as percent actives as would be understood by the skilled person.

In various embodiments, the terminology "free of" describes embodiments that include less than about 5, 4, 3, 2, 1, 0.5, or 0.1, weight percent (or weight percent actives) of the compound or element at issue using an appropriate weight basis as would be understood by one of skill in the art. In other embodiments, the terminology "free of" describes embodiments that have zero weight percent of the compound or element at issue.

The terminology "consists essentially of" may describe various non-limiting embodiments that are free of one or more optional compounds described herein and/or free of one or more polymers, surfactants, additives, solvents, etc.

It is to be understood that the subscripts of polymers are typically described as average values because the synthesis of polymers typically produces a distribution of various individual molecules.

It is contemplated that the terminology "group" may be replaced with moiety or residue, when appropriate, as understood by those of skill in the art.

The surfactants and compositions disclosed herein may suitably comprise, consist of, or consist essentially of the components, elements, and process delineations described herein. The embodiments illustratively disclosed herein suitably may be practiced in the absence of any element which is not specifically disclosed herein.

### Herbicidal Composition

This disclosure provides a herbicidal composition (hereinafter "composition"). In some embodiments, this composition is further described as an aqueous herbicidal concentrate composition. The composition includes (a) glyphosate or a derivative thereof, (b) a first surfactant present in an amount of from about 1 to about 15 weight percent actives based on a total weight of said composition and (c) a second surfactant present in an amount of from about 1 to about 15 weight percent actives based on a total weight of said composition. Each is described below.

In one embodiment, the composition is or includes (a), (b), and (c).

In another embodiment, the composition consists essentially of (a), (b), and (c).

In still another embodiment, the composition consists of (a), (b), and (c).

In other embodiments, the composition includes a), (b), and (c) and one or more additives described below.

In other embodiments, the composition consists essentially of a), (b), and (c) and one or more additives described below.

In other embodiments, the composition consists of a), (b), and (c) and one or more additives described below.

In any of the above embodiments, the composition may or may not include water, either as independently added or as included with one or more of the components (a), (b), and/or (c).

Moreover, the terminology "consists essentially of" describes that the composition may be free of, or include less than 5, 4, 3, 2, 1, or 0.5, weight percent actives of one or more polymers, solvents, actives, or additives that are not (a), (b), or (c). Alternatively, in such embodiments, the composition may be entirely free of such polymers, solvents, actives, or additives that are not (a), (b), or (c). In addition, such embodiments may or may not include water.

### Glyphosate

Referring now the (a) glyphosate, this component is typically primarily responsible for plant suppression or death (i.e., bioefficacy) and is instrumental in imparting long-term herbicidal control. The glyphosate may include or be glyphosate acid and/or agronomically acceptable derivatives thereof. Derivatives include salts, esters, or compounds which are converted to glyphosate in plant tissues or which otherwise provide glyphosate anions. In this regard it is to be noted that the term "glyphosate," "glyphosate derivative," etc. when used herein is understood to encompass glyphosate, derivatives and mixtures thereof unless the context requires otherwise. Furthermore, the term "agronomically acceptable" includes glyphosate derivatives that allow agriculturally and economically useful herbicidal activity of a glyphosate anion in residential or industrial applications. In various non-limiting embodiments, all values and ranges of values, both whole and fractional, including and between those described above are hereby expressly contemplated for use herein.

Typically, the glyphosate includes or is one or more of the more water-soluble salts of glyphosate. For example, at least about 50, 75, 90, 95, 98, 99, or 99.9, wt % of the glyphosate may be one or more of the more water-soluble salts of glyphosate. The water solubility of such salts allows formulation of highly concentrated herbicidal compositions that can be easily transported and readily diluted with water in the preparation of sprayable RTU compositions at the site of intended use.

Non-limiting examples of suitable salts of glyphosate include monobasic, dibasic, or tribasic salts and include organic amines, alkali metal, alkaline earth metal, ammonium (e.g., monoammonium, diammonium, or triammonium) and sulfonium (e.g., monosulfonium, disulfonium, or trimethylsulfonium ("TMS") salts of glyphosate. Organic amine salts can include aliphatic or aromatic amine salts and can include primary, secondary, tertiary, or quaternary amine salts. Non-limiting representative examples of such organic amine salts include isopropylamine ("IPA"), n- propylamine, ethylamine, dimethylamine ("DMA"), monoethanolamine ("MEA"), triethanolamine ("TEA"), ethylenediamine and hexamethylenediamine salts of glyphosate. Non-limiting representative examples of alkali metal salts include potassium and sodium salts of glyphosate.

In various embodiments, the glyphosate includes a salt chosen from potassium, monoammonium, diammonium, sodium, MEA, n-propylamine, IPA, ethylamine, DMA, ethylenediamine, hexamethylenediamine and TMS salts and combinations thereof. In various embodiments, the MEA, diammonium, and potassium salts and combinations thereof are especially utilized.

In various embodiments, the glyphosate includes or is a blend of the potassium salt of glyphosate and the monoethanolamine salt of glyphosate. The weight ratio of the potassium salt of glyphosate in grams acid equivalent to the monoethanolamine salt of glyphosate in grams acid equivalent may be from about 1:1 to about 4:1, such as about 7:3. In some embodiments, the weight ratio of the potassium salt of glyphosate in grams acid equivalent to the monoethanolamine salt of glyphosate in grams acid equivalent is about 7:3, which enables weight ratios of co-surfactants to amidoalkylamine coupling agents to vary from at least about 60:40, to at least about 65:35, and in some cases to at least about 70:30. In various non-limiting embodiments, all values and ranges of values, both whole and fractional, including and between those described above are hereby expressly contemplated for use herein.

In other embodiments, the glyphosate is or includes a blend of the potassium salt of glyphosate and the ammonium salt of glyphosate; a blend of the isopropylammonium salt of glyphosate and the ammonium salt of glyphosate; a blend of the potassium salt of glyphosate and the isopropylamine salt of glyphosate; a blend of the potassium salt of glyphosate and the triethanolamine salt of glyphosate; or a blend of the dimethylamine salt of glyphosate and the triethanolamine salt of glyphosate. In some embodiments, these glyphosate salts may be combined in a ratio of from about 1:4 to about 4 :1 (e.g., in a ratio of about 1:1 to about 4 :1). In various non-limiting embodiments, all values and ranges of values, both whole and fractional, including and between those described above are hereby expressly contemplated for use herein.

The composition of this disclosure may include water such that it is described as an aqueous composition. The term "aqueous," as used herein, refers to compositions comprising water in an amount that renders it the predominant solvent. "Aqueous" is not intended to exclude the presence of nonaqueous (i.e., organic) solvents, as long as water is present. Examples of suitable nonaqueous solvents include toluene, xylenes, petroleum naphtha, tetrahydrofurfuryl alcohol, ethylene glycol, polyethylene glycol, propylene glycol, ethanol, and hexanol.

The concentration of the glyphosate in an aqueous composition is typically at least about 300 grams acid equivalent per liter ("g a.e./L"), such as at least about 360 g a.e./L, or such as at least about 390 g a.e./L. In typical compositions, the glyphosate concentration is not lower than 400 g a.e./L or about 420 g a.e./L, in particularly typical compositions not lower than about 480 g a.e./L, about 500 g a.e./L, about 540 g a.e./L, about 580 g a.e./L, about 600 g a.e./L, or even about 620 g a.e./L, for example about 480 to about 540 g a.e./L, or about 480 to about 600 g a.e./L, or more. Accordingly, in some embodiments, the concentration of the glyphosate is from about 300 g a.e./L and about 600 g a.e./L, between about 420 g a.e./L and about 600 g a.e./L, or between about 480 g a.e./L and about 540 g a.e./L. In various compositions, the concentration of the glyphosate may be from about 480 g a.e./L to about 620 g a.e./L, for example from about 480 g a.e./L to about 600 g a.e./L, or from about 540 to about 620 g a.e./L. In other embodiments, the composition is further described as an RTU formulations prepared by diluting herbicidal concentrates with appropriate amounts of water. The concentration of the glyphosate in RTU compositions is typically at least about 1 g a.e./L, and generally from about 1 g a.e./L to about 50 g a.e./L. In order to provide more economical RTU formulations providing prolonged herbicidal activity, the concentration of the glyphosate component in the RTU composition is more typically from about 5 g a.e./L to about 20 g a.e./L. In various non-limiting embodiments, all values and ranges of values, both whole and fractional, including and between those described above are hereby expressly contemplated for use herein.

In other embodiments, the composition is not an aqueous or liquid composition and is instead a solid composition. In such embodiments, the concentrate of glyphosate is typically greater than 30% by weight acid equivalent of the composition, such as from about 30%> to about 90% by weight acid equivalent of the composition, such as from about 40% to about 90% by weight acid equivalent of the composition, and more typically from about 50% to about 80% by weight acid equivalent of the composition. In various non-limiting embodiments, all values and ranges of values, both whole and fractional, including and between those described above are hereby expressly contemplated for use herein.

### Co-Herbicide

The composition may further comprise or be free of a co-herbicide. In various embodiments, the composition is a tank mixed ready to use formulation further comprising a co-herbicide. In some embodiments, water-soluble co-herbicides can be included in the composition. Water-soluble co-herbicides include acifluorfen, acrolein, amitrole, asulam, benazolin, bentazon, bialaphos, bromacil, bromoxynil, chloramben, chloroacetic acid, clopyralid, 2,4-D, 2,4-DB, dalapon, dicamba, dichlorprop, difenzoquat, diquat, endothall, fenac, fenoxaprop, flamprop, flumiclorac, fluoroglycofen, flupropanate, fomesafen, fosamine, glufosinate, imazameth, imazamethabenz, imazamox, imazapic, imazapyr, imazaquin, imazethapyr, ioxynil, MCPA, MCPB, mecoprop, methylarsonic acid, naptalam, nonanoic acid, paraquat, picloram, quinclorac, sulfamic acid, 2,3,6-TBA, TCA, triclopyr and water-soluble salts thereof.

In some embodiments, co-herbicides that are not readily water-soluble can be coupled into the composition. In addition, the composition may include finely- divided, water-insoluble herbicides. Examples of herbicides having limited water solubility include, for example, acetochlor, aclonifen, alachlor, ametryn, amidosulfuron, anilofos, atrazine, azafenidin, azimsulfuron, benfluralin, benfuresate, bensulfuron-methyl, bensulide, benzofenap, bifenox, bromobutide, bromofenoxim, butachlor, butamifos, butralin, butroxydim, butylate, cafenstrole, carbetamide, carfentrazone-ethyl, chlomethoxyfen, chlorbromuron, chloridazon, chlorimuron-ethyl, chlornitrofen, chlorotoluron, chlorpropham, chlorsulfuron, chlorthal- dimethyl, chlorthiamid, cinmethylin, cinosulfuron, clethodim, clodinafop-propargyl, clomazone, clomeprop, cloransulam-methyl, cyanazine, cycloate, cyclosulfamuron, cycloxydim, cyhalofop- butyl, daimuron, desmedipham, desmetryn, dichlobenil, diclofop-methyl, diflufenican, dimefuron, dimepiperate, dimethachlor, dimethametryn, dimethenamid, dinitramine, dinoterb, diphenamid, dithiopyr, diuron, EPTC, esprocarb, ethalfluralin, ethametsulfuron-methyl, ethofumesate, ethoxysulfuron, etobenzanid, fenoxaprop-ethyl, fenuron, flamprop-methyl, flazasulfuron, fluazifop-butyl, fluchloralin, flumetsulam, flumiclorac-pentyl, flumioxazin, fluometuron, fluorochloridone, fluoroglycofen-ethyl, flupoxam, flurenol, fluridone, fluroxypyr- 1-methylheptyl, flurtamone, fluthiacet-methyl, fomesafen, halosulfuron, haloxyfop-methyl, hexazinone, imazamox, imazosulfuron, indanofan, isoproturon, isouron, isoxaben, isoxaflutole, isoxapyrifop, lactofen, lenacil, linuron, mefenacet, mesotrione, metamitron, metazachlor, methabenzthiazuron, methyldymron, metobenzuron, metobromuron, metolachlor, metosulam, metoxuron, metribuzin, metsulfuron, molinate, monolinuron, naproanilide, napropamide, naptalam, neburon, nicosulfuron, norflurazon, orbencarb, oryzalin, oxadiargyl, oxadiazon, oxasulfuron, oxyfluorfen, pebulate, pendimethalin, pentanochlor, pentoxazone, phenmedipham, piperophos, pretilachlor, primisulfuron, prodiamine, prometon, prometryn, propachlor, propanil, propaquizafop, propazine, propham, propisochlor, propyzamide, prosulfocarb, prosulfuron, pyraflufen-ethyl, pyrazolynate, pyrazosulfuron-ethyl, pyrazoxyfen, pyributicarb, pyridate, pyriminobac-methyl, quinclorac , quinmerac, quizalofop-ethyl, rimsulfuron, sethoxydim, siduron, simazine, simetryn, sulcotrione, sulfentrazone, sulfometuron, sulfosulfuron, tebutam, tebuthiuron, terbacil, terbumeton, terbuthylazine, terbutryn, thenylchlor, thiazopyr, thifensulfuron, thiobencarb, tiocarbazil, tralkoxydim, triallate, triasulfuron, tribenuron, trietazine, trifluralin, triflusulfuron, and vernolate.

### First Surfactant (b)

Referring now to the (b) first surfactant, this surfactant is present in an amount of from about 1 to about 15 weight percent actives based on a total weight of said composition. In various embodiments, this amount is from about 2 to about 14, about 3 to about 13, about 4 to about 12, about 5 to about 11, about 6 to about 10, about 7 to about 9, or about 8 to about 9, weight percent actives based on a total weight of said composition. In other embodiments, this amount is from about 4 to about 8, about 4 to about 6, or about 6 to about 8, weight percent actives based on a total weight of said composition. In various non-limiting embodiments, all values and ranges of values, both whole and fractional, including and between those described above are hereby expressly contemplated for use herein.

The (b) first surfactant has the structure as follows: 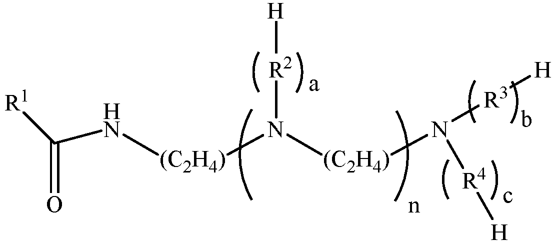 wherein R¹ is a linear or branched, saturated or unsaturated alkyl group having from 5 to 22 carbon atoms, each of R², R³ and R⁴ is independently an alkylene oxide group, a is from 0 to 10, each of b and c is independently from about 1 to about 10; and n is 0 to about 3.

In various embodiments, R¹ is a linear group. In other embodiments, R¹ is a branched group. R¹ may be an alkyl group which is saturated or an alkenyl group which is unsaturated. R¹ may have from 6 to 21, 7 to 20, 8 to 19, 9 to 18, 10 to 17, 11 to 16, 12 to 15, or 13 to 14 carbon atoms. In other embodiments, R¹ has from 8 to 20, 8 to 18, 8 to 16, 8 to 14, 8 to 12, 8 to 10, 12 to 20, 12 to 18, 12 to 16, or 12 to 14 carbon atoms. In various non-limiting embodiments, all values and ranges of values including and between those described above are hereby expressly contemplated for use herein.

Each of R², R³ and R⁴ is independently an alkylene oxide group. The subscript a is 0 to about 10. If a is zero then R² does not exist and the hydrogen atom is directly bonded to the nitrogen atom. In addition, each of b and c is independently about 1 to about 10. Each of R², R³ and R⁴ can independently be a single alkylene oxide group or more than one, e.g. up to about 10, alkylene oxide groups. Each of the alkylene oxide groups may be as described above. Each set of alkylene oxide groups may be arranged randomly, in blocks, etc. In various embodiments, a, b, and/or c is from about 1 to about 10, about 2 to about 9, about 3 to about 8, about 4 to about 7, or about 5 to about 6. Alternatively, a may be a fractional number that is greater than zero but less than 1. Moreover, n may be 0, 1, 2, or 3. In various non-limiting embodiments, all values and ranges of values, both whole and fractional, including and between those described above are hereby expressly contemplated for use herein.

In one embodiment, R¹ is a linear alkyl group having from about 12 to about 18 carbon atoms, e.g. about 12, 13, 14, 15, 16, 17, or 18 carbon atoms. In another embodiment, R¹ is a soy group. Alternatively, R¹ is a coco group. In related embodiments, n is 1. In other embodiments, the alkylene oxide groups of R², R³ and R⁴ are ethylene oxide groups and a is from about 1 to about 6, e.g. 1, 2, 3, 4, 5, or 6. In other embodiment, a is about 1 to about 4, e.g. 1, 2, 3, or 4. In various non-limiting embodiments, all values and ranges of values, both whole and fractional, including and between those described above are hereby expressly contemplated for use herein.

### Second Surfactant (c)

Referring now to the (c) second surfactant, this surfactant is present in an amount of from about 1 to about 15 weight percent actives based on a total weight of said composition. In various embodiments, this amount is from about 2 to about 14, about 3 to about 13, about 4 to about 12, about 5 to about 11, about 6 to about 10, about 7 to about 9, or about 8 to about 9, weight percent actives based on a total weight of said composition. In other embodiments, this amount is from about 2 to about 8, about 4 to about 6, about 4 to about 8, about 6 to about 8, etc., weight percent actives based on a total weight of said composition. In various non-limiting embodiments, all values and ranges of values, both whole and fractional, including and between those described above are hereby expressly contemplated for use herein.

The second surfactant has the following structure: 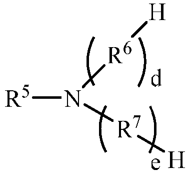 wherein R⁵ is a linear or branched, saturated or unsaturated alkyl group having from 8 to 18 carbon atoms, each of R⁶ and R⁷ is independently an alkylene oxide group, and each of d and e is independently from about 1 to about 5.

In various embodiments, R⁵ is a linear group. In other embodiments, R⁵ is a branched group. R⁵ may be an alkyl group which is saturated or an alkenyl group which is unsaturated. R⁵ may have from 9 to 18, 10 to 17, 11 to 16, 12 to 15, or 13 to 14 carbon atoms. In other embodiments, R⁵ has from 8 to 18, 8 to 16, 8 to 14, 8 to 12, 8 to 10, 12 to 20, 12 to 18, 12 to 16, or 12 to 14 carbon atoms. In various non-limiting embodiments, all values and ranges of values including and between those described above are hereby expressly contemplated for use herein.

In other embodiments, each of R⁶ and R⁷ is independently an alkylene oxide group. The alkylene oxide group may be an ethylene oxide group, a propylene oxide group, or a butylene oxide group. In addition, each of d and e independently about 1 to about 5. This means that each of R⁶ and R⁷ can independently be a single alkylene oxide group or more than one, e.g. up to about 5, alkylene oxide groups. Each of the alkylene oxide groups may be as described above. Each set of alkylene oxide groups may be arranged randomly, in blocks, etc. In various embodiments, d and/or e is from about 1 to about 5, about 2 to about 4, or about 2 to about 3. In various non-limiting embodiments, all values and ranges of values, both whole and fractional, including and between those described above are hereby expressly contemplated for use herein.

In various embodiments, R⁵ is a coco group. In other embodiments, each of R⁶ and R⁷ is an ethylene oxide group. In still other embodiments, each of d and e is about 1.

In still other embodiments, this disclosure provides an aqueous herbicidal concentrate composition comprising:
(a) glyphosate or a derivative thereof present in an amount of from about 300 to about 700 grams acid equivalent per liter;
(b) a first surfactant present in an amount of from about 3 to about 8 weight percent actives based on a total weight of said composition and having the structure: 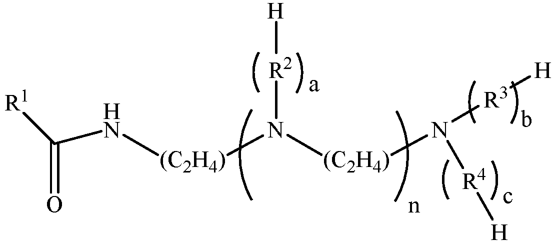 wherein R¹ is soy group, each of R², R³ and R⁴ is an ethylene oxide group, a is about 1 to about 6 and each of b and c is independently about 4 to about 5, and n is about 1; and
(c) a second surfactant present in an amount of from about 2 to about 8 weight percent actives based on a total weight of said composition and having the structure: 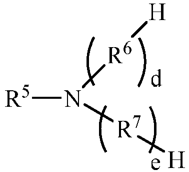 wherein R⁵ is a coco group, each of R⁶ and R⁷ is independently an ethylene oxide group, and each of d and e is independently about 1.

In various embodiments, the composition includes a concentration ratio of glyphosate in grams acid equivalent ("g a.e./L") to the first and/or second surfactants in g/L of from about 1:1 to about 50:1, about 2 :1 to about 20: 1, about 2 :1 to about 10:1, about 3:1 to about 10:1, or about 3:1 to about 5:1, such as about 4:1. In other embodiments, total surfactant loadings of about 120 g/L to about 150 g/L, such as about 135 g/L, can be attained in compositions including glyphosate salt loadings of about 480 g a.e./L to about 600 g a.e./L, such as about 540 g/L. In still other embodiments, such as solid composition, a weight ratio of glyphosate in grams acid equivalent ("g a.e.") to the first and/or second surfactants in grams may generally vary from about 1:1 to about 50:1, e.g. about 2 :1 to about 20: 1, about 2:1 to about 10:1, from about 3:1 to about 10:1, or about 3:1 to about 5:1, such as about 4:1.

The composition may also include, or be free of, one or more additives such as conventional adjuvants, excipients, or additives known to those skilled in the art. These additives may be introduced into the composition to provide or improve certain desired properties or characteristics. In various embodiments, the one or more additives may be chosen from foam-moderating agents, surfactants, preservatives or anti-microbials, antifreeze agents, solubility-enhancing agents, dyes, pH adjusters and thickening agents, and combinations thereof.

In other embodiments, the composition may include, or be free of, one or more safening agents that inhibit plant injury caused by the presence of N-(phosphonomethyl)iminodiacetic acid ("PMIDA"). Suitable safening agents are described in U.S. 8,129,564, which is herein incorporated by reference in its entirety in various non-limiting embodiments. Typically, the safening agent comprises a metal ion that is subject to formation of a complex or salt with N-(phosphonomethyl)iminodiacetic acid or an anion formed by deprotonation or partial deprotonation thereof, the formation of such complex or salt being effective to inhibit significant leaf necrosis in the crop of transgenic glyphosate-tolerant cotton plants induced by N-(phosphonomethyl)iminodiacetic acid or salt thereof present in the composition. For example, the composition may comprise a metal ion chosen from aluminum, copper, iron, zinc, and mixtures thereof. In some embodiments, the composition comprises iron ions (e.g., ferric sulfate). In other embodiments, the composition further comprises a solubilizing ligand (e.g., citric acid).

In addition to the surfactants described above, the composition may include, or be free of, one or more additional surfactants such as cationic, nonionic, and anionic surfactants. Suitable classes of cationic surfactants include primary, secondary and tertiary alkylamines, primary, secondary and tertiary alkylammonium salts in which an amine group is substantially protonated in the formulation, onium salts such as quaternary alkylammonium salts, and mixtures thereof. A wide variety of primary, secondary, tertiary, quaternary and zwitterionic alkylamine and alkylammonium salt surfactants can be utilized in the preparation of the herbicidal compositions described herein. A subclass of primary, secondary, and tertiary alkylamine surfactants for use in the present compositions are alkyl amine oxides, alkyletheramines, and alkyletheramine oxides.

In other embodiments, the composition may comprise or be free of one or more foam-moderating agents.

Suitable foam-moderating agents include silicone-based compositions. An example of a foam- moderating agent for compositions is SAG- 10, available from GE Silicones Corporation (Wilton, Conn.). The amount of foam-moderating agent optionally employed is that which is sufficient to inhibit and/or reduce an amount of foam that may otherwise be formed during the process of preparing and containerizing the formulation and/or use thereof to a desired and satisfactory level. Generally, the concentration of foam-moderating agent is from about 0.001% up to about 0.05% by weight of the composition, and typically from about 0.01% to about 0.03% by weight of the composition, although greater or lesser amounts may be employed.

In still other embodiments, the composition may also comprise or be free of a preservative such as PROXEL GXL containing l,2-benzisothiazolin-3-one (CAS No. 2634-33-5) available from Avecia, Inc. (Wilmington, Del.), DOWICIL 150 containing cis-1-(3-chloroallyl)-3,5,7-triaza-l- azoniaadmatane chloride (CAS No. 051229-78-8) available from Dow Chemical Company (Midland, Mich.), NIPACIDE BIT20DPG containing benzisothiazolinone available from Clariant Corporation (Greensboro, N.C.), LEGEND MK anti-microbial biocide available from Rohm and Haas Co. (Philadelphia, Pa.), sorbic acid, mixtures thereof and the like in the range of from about 0.01% to about 0.2% by weight, preferably about 0 . 1% by weight of the composition.

In still other embodiments, the composition may also comprise or be free of an antifreeze agent such as ethylene glycol and propylene glycol which y may be present at a concentration of from about 0 . 1 to about 10 weight percent actives based on a total weight of the composition. Antifreeze agents assist in lowering the freezing point of aqueous solutions and maintaining solubility of the components of the composition such that components do not crystallize or precipitate during cycles of freezing and thawing.

Although the compositions generally show good overall stability and viscosity properties without the addition of any further additives, the addition of a solubility-enhancing agent (also commonly referred to as a cloud point enhancer or stabilizer) may significantly improve the properties of the compositions. Solubility-enhancing agents can include polymer derivatives of ethylene glycol and propylene glycol (e.g., 200-1200 average molecular weight), glycerol, sugars, mixtures thereof and the like in amounts up to about 10 %, e.g. about 0.05 to about 10%, or about 0.1 to about 1% by weight of the composition.

### Physical Properties

Referring back to the composition as a whole, the composition is not limited to any particular pH. In various embodiments, the pH can contribute to stability, cloud point, compatibilization of glyphosate salts with the surfactants used, and compatibilization with co-herbicides, if added. In various embodiments, the pH is from about 4 to about 8, about 5 to about 7, about 6 to about 8, etc. In one embodiment, the pH is from about 4.5 to about 5.5. In other embodiments, the pH is from about 5.5 to about 6.5. pH adjusting agents for acidic adjustment include mineral acids such as, for example, hydrochloric acid, nitric acid or sulfuric acid, and organic acids such as, for example, acetic acid or dicarboxylic acids. pH adjusting agents for alkaline adjustment include, for example, sodium hydroxide, potassium hydroxide, ammonia, and organic bases, such as IPA, MEA, and DMA. In various non-limiting embodiments, all values and ranges of values, both whole and fractional, including and between those described above are hereby expressly contemplated for use herein.

Referring to compatibility, the compatibility of the composition is typically measured as a function of the compatibility of the glyphosate and the first and second surfactants. This can be reported as cloud point. As is known in the art, cloud point is the temperature above which a transparent solution undergoes either a liquid-liquid phase separation or a liquid-solid phase transition. Cloud point may be described as the minimum temperature at which the first crystal formation begins. The higher the cloud point, the better the compatibility between the glyphosate and the first and second surfactants. Typically, the compositions of this disclosure remain stable before reaching the cloud point. In various embodiments, the composition has a cloud point of at least room temperature or at least about 25, 30, 35, 40, 45, 50, 55, 60, 65, 70, 75, 80, or 85, °C or even higher. Typically, the composition can be evaluated to determine cloud point using the following procedure. The composition is poured into a 25 mm x 200 mm PYREX test tube to a level of approximately 2 inches from the bottom. The test sample is heated until cloudy using a hot water bath. Once the composition becomes cloudy, or the temperature reaches 100 °C, the test sample is removed from the water bath. If the composition remains clear throughout the test, the cloud point is recorded as 100°C. If cloudy, the composition is stirred until it becomes clear. The temperature at which the test sample becomes clear is recorded as the cloud point.

Without intending to be bound by theory, it is believed that the second surfactant is contributing to the compatibility and allowing for higher storage temperature and for greater levels of adjuvants to be used. This also allows greater amounts of glyphosate to be used as cloud point is increased because glyphosate on its own tends to lower the cloud point.

### Method of Forming the Composition

The composition may be formed using any method known in the art. For example, the composition may be formed by combining (a), (b), and (c), and any additives or water, in batch form or continuously, e.g. using a mechanical stirrer or any other suitable container or device producing the necessary amount of agitation or circulation to thoroughly mix the ingredients. The order of addition may be any combination of ingredients either in whole or in part. In one embodiment, water is added to a mixing vessel, followed by the addition of the glyphosate salt and then the first and/or second surfactants. In some embodiments, a co-surfactant may be added as a preblended mixture. Co-surfactants may be added singly, either before or after addition of the first and second surfactants.

A solid composition may be formed by combining the aforementioned ingredients by mixing using a mechanical stirrer, ball milling, or any other suitable container or device producing the necessary amount of agitation or circulation to thoroughly mix the ingredients. RTU compositions can be prepared by diluting an aqueous composition or dissolving a solid composition with an appropriate amount of water.

### Method for Killing Weeds

This disclosure also provides a method for killing or controlling weeds or other unwanted plants by spraying or otherwise applying a herbicidally effective amount of the composition to the foliage of the plants to be treated via any known method. In some embodiments, the composition is packaged in a portable container suitable for hand carry by a user and fitted with an apparatus for manually releasing the composition from the container onto the foliage of the plants to be treated in the form of a spray.

The composition can be used to kill or control the growth of a wide variety of plants including, without limitation, velvetleaf *(Abutilon theophrasti),* pigweed *(Amaranthus spp.),* buttonweed *(Borreria spp.),* oilseed rape, canola, indian mustard, etc. *(Brassica spp.),* commelina *(Commelina spp.),* filaree *(Erodium spp.),* sunflower *(Helianthus spp.),* morningglory *(Ipomoea spp.),* kochia *(Kochia scoparia),* mallow *(Malva spp.),* wild buckwheat, smartweed, etc. *(Polygonum spp.),* purslane *(Portulaca spp.),* Russian thistle *(Salsola spp.),* sida *(Sida spp.),* wild mustard *(Sinapis arvensis)* and cocklebur *(Xanthium spp.).*

Other plant species that may be killed or controlled include, without limitation, wild oat *(Avenafatua),* carpetgrass *(Axonopus spp.),* downy brome *(Bromus tectorum),* crabgrass *(Digitaria spp),* barnyardgrass *(Echinochloa crus-galli),* goosegrass *(Eleusine indicd),* annual ryegrass *(Lolium multiflorum),* rice *(Oryza sativa),* ottochloa *(Ottochloa nodosa),* bahiagrass *(Paspalum notatum),* canarygrass *(Phalaris spp.),* foxtail *(Setaria spp.),* wheat *(Triticum aestivum)* and corn *(Zea mays).*

Other plant species that may be killed or controlled include, without limitation, mugwort *(Artemisia spp.),* milkweed *(Asclepias spp.),* Canada thistle *(Cirsium arvense),* field bindweed *(Convolvulus arvensis)* and kudzu *(Pueraria spp.).*

Other plant species that may be killed or controlled include, without limitation, brachiaria *(Brachiaria spp.),* bermudagrass *(Cynodon dactylon),* quackgrass *(Elymus repens),* lalang *(Imperata cylindrica),* perennial ryegrass *(Lolium perenne),* guineagrass *(Panicum maximum),* dallisgrass *(Paspalum dilatatum),* reed *(Phragmites spp.),* johnsongrass *(Sorghum halepense)* and cattail *(Typha spp.).*

Other plant species that may be killed or controlled include, without limitation, horsetail *(Equisetum spp.),* bracken *(Pteridium aquilinum),* blackberry *(Rubus spp)* and gorse *(Ulex europaeus).*

### EXAMPLES

A series of Example compositions were formed as shown below and evaluated to determine approximate cloud point.

| **Ex** | **K-glyphosate g a.e./L** | **First Surfactant** | **wt% Actives** | **Second Surfactant** | **wt% Actives** | **Approximate Cloud Point (°C)** |
|---|---|---|---|---|---|---|
| 1 | 540 | Surfactant 1 | 7.0% | Surfactant 7 | 3.0% | < RT |
| 2 | 540 | Surfactant 1 | 5.0% | Surfactant 7 | 5.0% | 79 |
| 3 | 540 | Surfactant 1 | 6.0% | Surfactant 7 | 4.0% | 50 |
| 4 | 540 | Surfactant 2 | 5.0% | Surfactant 7 | 5.0% | 65 |
| 5 | 540 | Surfactant 3 | 5.0% | Surfactant 7 | 5.0% | >80 |
| 6 | 540 | Surfactant 4 | 5.0% | Surfactant 7 | 5.0% | 50 |
| 7 | 540 | Surfactant 5 | 7.0% | Surfactant 7 | 3.0% | 63 |
| 8 | 540 | Surfactant 5 | 6.5% | Surfactant 7 | 3.5% | 78 |
| 9 | 540 | Surfactant 5 | 6.0% | Surfactant 7 | 4.1% | > 90 |
| 10 | 540 | Surfactant 1 | 7.0% | Surfactant 7 | 3.0% | < RT |
| 11 | 540 | Surfactant 1 | 6.6% | Surfactant 7 | 3.6% | 44 |
| 12 | 540 | Surfactant 1 | 6.5% | Surfactant 7 | 3.5% | 43 |
| 13 | 540 | Surfactant 1 | 6.0% | Surfactant 7 | 4.0% | 64 |
| 14 | 540 | Surfactant 1 | 5.5% | Surfactant 7 | 4.5% | 76 |
| 15 | 540 | Surfactant 6 | 6.0% | Surfactant 7 | 4.0% | < RT |
| 16 | 540 | Surfactant 6 | 5.5% | Surfactant 7 | 4.5% | 53 |
| 17 | 540 | Surfactant 6 | 5.1% | Surfactant 7 | 5.0% | 62 |
| 18 | 540 | Surfactant 6 | 4.6% | Surfactant 7 | 5.5% | 68 |
| 19 | 540 | Surfactant 6 | 4.0% | Surfactant 7 | 6.0% | 76 |
| 20 | 540 | Surfactant 3 | 8.0% | Surfactant 7 | 2.0% | < RT |
| 21 | 540 | Surfactant 3 | 7.0% | Surfactant 7 | 3.0% | 62 |
| 22 | 540 | Surfactant 3 | 6.5% | Surfactant 7 | 3.5% | 76 |
| 23 | 540 | Surfactant 2 | 7.0% | Surfactant 7 | 3.0% | < RT |
| 24 | 540 | Surfactant 2 | 6.0% | Surfactant 7 | 4.0% | 44 |
| 25 | 540 | Surfactant 2 | 5.5% | Surfactant 7 | 4.5% | 62 |
| 26 | 540 | Surfactant 2 | 5.0% | Surfactant 7 | 5.0% | 77 |
| 27 | 540 | Surfactant 4 | 6.0% | Surfactant 7 | 4.0% | < RT |
| 28 | 540 | Surfactant 4 | 5.5% | Surfactant 7 | 4.5% | 33 |
| 29 | 540 | Surfactant 4 | 5.0% | Surfactant 7 | 5.0% | 45 |
| 30 | 540 | Surfactant 4 | 4.5% | Surfactant 7 | 5.5% | 62 |
| 31 | 540 | Surfactant 4 | 4.0% | Surfactant 7 | 6.0% | 72 |

In the above, "the terminology "RT" refers to room temperature of about 25°C.

Each of the Surfactants 1-6 has the following general structure:

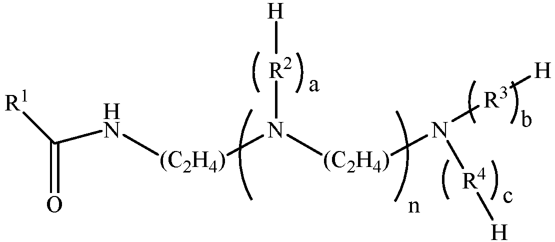

For Surfactant 1: R¹ is a soy group (C₁₆-C₁₈), each of R², R³, and R⁴ is ethylene oxide, n is 1, and a+b+c is about 12.5.

For Surfactant 2: R¹ is a coco group (C₁₂-C₁₄), each of R², R³, and R⁴ is ethylene oxide, n is 1, and a+b+c is about 12.5.

For Surfactant 3: R¹ is a coco group (C₁₂-C₁₄), each of R², R³, and R⁴ is ethylene oxide, n is 1, and a+b+c is about 10.

For Surfactant 4: R¹ is a coco group (C₁₂-C₁₄), each of R², R³, and R⁴ is ethylene oxide, n is 1, and a+b+c is about 15.

For Surfactant 5: R¹ is a soy group (C₁₆-C₁₈), each of R², R³, and R⁴ is ethylene oxide, n is 1, and a+b+c is about 10.

For Surfactant 6: R¹ is a soy group (C₁₆-C₁₈), each of R², R³, and R⁴ is ethylene oxide, n is 1, and a+b+c is about 15.

Surfactant 7 has the following structure: 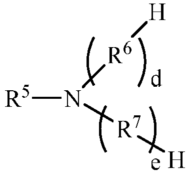 wherein R⁵ is a coco group (C₁₂-C₁₄), each of R⁶ and R⁷ is ethylene oxide and d+e is about 2.

The data set forth above shows that higher cloud points are attainable using this technology. This allows higher loadings of glyphosate to be used. This in turn increases weed killing efficiency. Therefore, this is superior over what is known in the art because compositions that have lower cloud points tend to suffer from compatibility issues. It is unexpected because the specifically claimed amines are shown to produce unexpectedly high cloud points especially because alkoxylated compounds are known in the art to be not compatible with high loadings of glyphosate.

### Herbicidal Effectiveness

Examples 2 and 4 above are further evaluated to determine herbicidal effectiveness (i.e., weed efficacy of individual samples against wheat) as compared to a K-Glyphosate only control and a Roundup Weathermax positive control. The results are set forth in FIG. 1. More specifically, the herbicidal effectiveness data set forth herein report "control" as a percentage following a standard procedure known in the art which reflects a visual assessment of plant mortality and growth reduction by comparison with untreated plants, made by technicians trained to make and record such observations. In all cases, a single technician makes all assessments of percent control within any one experiment or trial. Percent control of individual weed species was visually evaluated 7-28 days after application. Each sample is applied at 200 g ae/ha, 350 g ae/ha and 500 g ae/ha, respectively, calculated on a glyphosate acid equivalent (a.e.) basis to ensure the same amount of glyphosate acid was applied regardless of the type of glyphosate salt in the formulation. The Roundup Weathermax commercial standard was included in each trial as a positive control. High injury indicates high herbicidal effectiveness.

This data shows the formulation of this disclosure provides significantly increased bioefficacy (effectiveness in weed control) compared to glyphosate itself, as well as comparable bioefficacy compared to the positive control. These results are superior over what is known in the art which is that compositions that have lower cloud points suffer from compatibility issues that results in decayed bioefficacy. These results are unexpected because the amines of this disclosure are shown to produce unexpectedly high cloud points as well as improved bioefficacy especially because alkoxylated compounds are known in the art to be not compatible with high loadings of glyphosate.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration in any way. Rather, the foregoing detailed description will provide those skilled in the art with a convenient road map for implementing an exemplary embodiment. It being understood that various changes may be made in the function and arrangement of elements described in an exemplary embodiment without departing from the scope as set forth in the appended claims.

The present disclosure may be further described by the following Aspects.
**Aspect 1.** A herbicidal composition comprising:
   (a) glyphosate or a derivative thereof;
   (b) a first surfactant present in an amount of from about 1 to about 15 weight percent actives based on a total weight of said composition and having the structure: 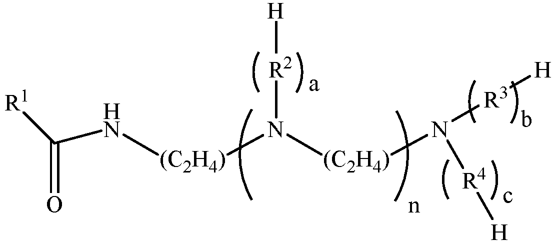 wherein R¹ is a linear or branched, saturated or unsaturated alkyl group having from 5 to 22 carbon atoms,
      each of R², R³ and R⁴ is independently an alkylene oxide group,
      a is from 0 to 10,
      each of b and c is independently from about 1 to about 10; and
      n is 0 to about 3; and
   (c) a second surfactant present in an amount of from about 1 to about 15 weight percent actives based on a total weight of said composition and having the structure: 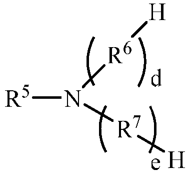 wherein R⁵ is a linear or branched, saturated or unsaturated alkyl group having from 8 to 18 carbon atoms,
      each of R⁶ and R⁷ is independently an alkylene oxide group, and
      each of d and e is independently from about 1 to about 5.
**Aspect 2.** The composition of Aspect 1 wherein the R¹ is a linear alkyl group having from about 12 to about 18 carbon atoms.
**Aspect 3.** The composition of Aspect 1 wherein R¹ is chosen from a soy group and a coco group.
**Aspect 4.** The composition of Aspect 1 wherein the R¹ is a soy group and n is 1.
**Aspect 5.** The composition of Aspect 1 wherein the R¹ is a coco group and n is 1.
**Aspect 6.** The composition of any one of Aspects 1-4 wherein R² comprises an alkylene oxide group.
**Aspect 7.** The composition of Aspect 6 wherein the alkylene oxide group is an ethylene oxide group and a is from about 1 to about 6.
**Aspect 8.** The composition of Aspect 7 wherein a is about 1-4.
**Aspect 9.** The composition of any preceding Aspect wherein R⁵ is a coco group.
**Aspect 10.** The composition of any preceding Aspect wherein each of R⁶ and R⁷ is an ethylene oxide group.
**Aspect 11.** The composition of any preceding Aspect wherein each of d and e is about 1.
**Aspect 12.** The composition of any preceding Aspect wherein the (b) first surfactant is present in an amount of from about 3 to about 8 weight percent actives based on a total weight of said composition.
**Aspect 13.** The composition of any preceding Aspect wherein the (c) second surfactant is present in an amount of from about 2 to about 8 weight percent actives based on a total weight of said composition.
**Aspect 14.** The composition of any preceding Aspect having a cloud point of at least room temperature.
**Aspect 15.** The composition of any preceding Aspect that is an aqueous composition and comprises water.
**Aspect 16.** The composition of any one of Aspects 1-13 that is a solid composition and comprises less than about 1 wt% of water based on a total weight of the composition.
**Aspect 17.** A method of forming the composition of any preceding Aspect comprising the step of combining (a), (b), and (c).
**Aspect 18.** A method of killing weeds comprising the step of applying the composition of any one of Aspects 1-16 to foliage of a target plant.
**Aspect 19.** An aqueous herbicidal composition comprising water and:
   (a) glyphosate or a derivative thereof present in an amount of from about 300 to about 700 grams acid equivalent per liter;
   (b) a first surfactant present in an amount of from about 3 to about 8 weight percent actives based on a total weight of said composition and having the structure: 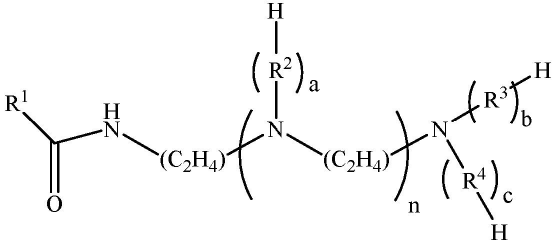
      wherein R¹ is a soy group, and each of R², R³ and R⁴ comprises an ethylene oxide group, a is about 1 to about 6;
      each of b and c is independently about 4 to about 5; and
      n is about 1; and
   (c) a second surfactant present in an amount of from about 2 to about 8 weight percent actives based on a total weight of said composition and having the structure: 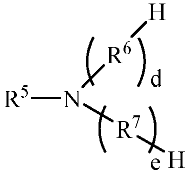
      wherein R⁵ is a coco group,
      each of R⁶ and R⁷ comprises an ethylene oxide group, and
      each of d and e is independently about 1.
**Aspect 20.** The composition of any preceding Aspect having a cloud point of at least room temperature.

## Claims

1. A herbicidal composition comprising:
(a) glyphosate or a derivative thereof;
(b) a first surfactant present in an amount of from about 1 to about 15 weight percent actives based on a total weight of said composition and having the structure: 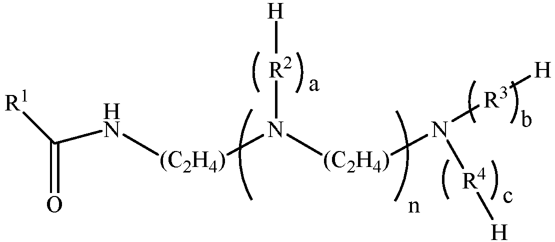
wherein R¹ is a linear or branched, saturated or unsaturated alkyl group having from 5 to 22 carbon atoms,
each of R², R³ and R⁴ is independently an alkylene oxide group,
a is from 0 to 10,
each of b and c is independently from about 1 to about 10; and
n is 0 to about 3; and
(c) a second surfactant present in an amount of from about 1 to about 15 weight percent actives based on a total weight of said composition and having the structure: 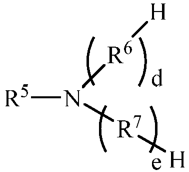
wherein R⁵ is a linear or branched, saturated or unsaturated alkyl group having from 8 to 18 carbon atoms,
each of R⁶ and R⁷ is independently an alkylene oxide group, and
each of d and e is independently from about 1 to about 5.

2. The composition of claim 1 wherein the R¹ is a linear alkyl group having from about 12 to about 18 carbon atoms.

3. The composition of claim 1 wherein R¹ is chosen from a soy group and a coco group.

4. The composition of claim 1 wherein the R¹ is a soy group and n is 1 or wherein the R¹ is a coco group and n is 1.

5. The composition of any one of claims 1-4 wherein R² comprises an alkylene oxide group, wherein the alkylene oxide group is optionally an ethylene oxide group and a is optionally from about 1 to about 6.

6. The composition of any preceding claim wherein R⁵ is a coco group.

7. The composition of any preceding claim wherein each of R⁶ and R⁷ is an ethylene oxide group.

8. The composition of any preceding claim wherein each of d and e is about 1.

9. The composition of any preceding claim wherein the (b) first surfactant is present in an amount of from about 3 to about 8 weight percent actives based on a total weight of said composition, and/or wherein the (c) second surfactant is present in an amount of from about 2 to about 8 weight percent actives based on a total weight of said composition.

10. The composition of any preceding claim having a cloud point of at least room temperature.

11. The composition of any preceding claim that is an aqueous composition and comprises water.

12. The composition of any one of claims 1-9 that is a solid composition and comprises less than about 1 wt% of water based on a total weight of the composition.

13. A method of forming the composition of any preceding claim comprising the step of combining (a), (b), and (c).

14. A method of killing weeds comprising the step of applying the composition of any one of claims 1-12 to foliage of a target plant.

15. An aqueous herbicidal composition comprising water and:
(a) glyphosate or a derivative thereof present in an amount of from about 300 to about 700 grams acid equivalent per liter;
(b) a first surfactant present in an amount of from about 3 to about 8 weight percent actives based on a total weight of said composition and having the structure: 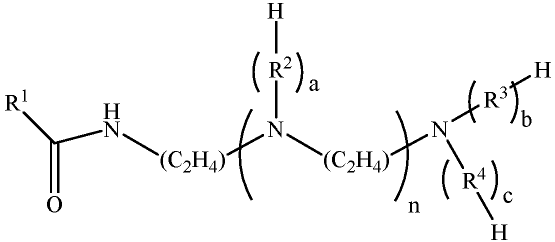
wherein R¹ is a soy group, and each of R², R³ and R⁴ comprises an ethylene oxide group, a is about 1 to about 6;
each of b and c is independently about 4 to about 5; and
n is about 1; and
(c) a second surfactant present in an amount of from about 2 to about 8 weight percent actives based on a total weight of said composition and having the structure: 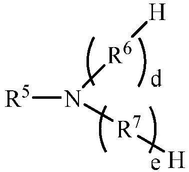
wherein R⁵ is a coco group,
each of R⁶ and R⁷ comprises an ethylene oxide group, and
each of d and e is independently about 1.
